# EUROPEAN PATENT APPLICATION

(11) **EP 4 597 320 A1**
(43) Date of publication of application: **06.08.2025**
(21) Application number: 23870076.9
(22) Date of filing: 24.08.2023
(51) Int. Cl.: G06F 11/07

(54) **FAULT PROCESSING METHOD AND APPARATUS FOR NEURAL NETWORK PROCESSOR**

(30) Priority: 30.09.2022 CN 202211208823
(71) Applicant: Beijing Horizon Robotics Technology Research and Development Co., Ltd., Beijing 100094 (CN)
(72) Inventor: TAN, Honghe, Beijing 100094 (CN)
(74) Representative: v. Bezold & Partner Patentanwälte - PartG mbB
(86) International application number: PCT/CN2023/114743
(87) International publication number: WO 2024/066833

(57) **Abstract**

Disclosed are a fault handling method and apparatus for a neural network processor, comprising: obtaining fault information of the neural network processor; determining a fault type of a faulty module in the neural network processor according to the fault information; and handling the fault in the faulty module using a preset regulation mode according to the fault type. When a fault is detected in the neural network processor, the present disclosure does not immediately restart the entire neural network processor or the entire autonomous driving system. Instead, the method described above is adopted to first determine the fault type of the current fault, and then select an appropriate regulation mode to handle the fault in the faulty module. This enables the neural network processor to be quickly restored to a normal working state and continue executing tasks that were interrupted by the fault, thereby improving the fault handling efficiency of the neural network processor. This ensures that the autonomous driving system can respond quickly to external information without affecting the execution progress of tasks.

## Description

This disclosure claims priority to Chinese patent application No. 202211208823.4, filed on September 30, 2022 and entitled "fault processing method and apparatus for neural network processor", which is incorporated herein by reference in its entirety.

### FIELD OF THE INVENTION

The present disclosure relates to the field of artificial intelligence technologies, and particularly to a fault handling method and apparatus for a neural network processor, a computer-readable storage medium, and an electronic device.

### BACKGROUND OF THE INVENTION

Neural network technology is widely applied in fields such as security monitoring, assisted driving, intelligent robotics, and intelligent healthcare, to accomplish diverse tasks. For instance, in autonomous driving systems, neural network technology is utilized for image recognition, image classification, speech recognition, etc. While performing various tasks using neural network algorithms, it is necessary to utilize the neural network processor to complete the processing of data, so in order to ensure the smooth execution of various tasks, the fault handling of the neural network processor (or neural network gas pedal) is very important.

Currently, when a fault is detected in a neural network processor, the conventional approach involves restarting the entire processor. However, restarting the entire neural network processor consumes substantial time, resulting in delayed processing and feedback to external information, thereby impeding task execution progress.

### SUMMARY OF THE INVENTION

To resolve the aforementioned technical challenges, embodiments of the present disclosure provide a fault handling method and apparatus for a neural network processor, which may rapidly locates faulty modules, identifies fault types, and enables the neural network processor to be quickly restored to a normal working state and continue executing tasks that were interrupted by the fault. This improves fault handling efficiency of neural network processor and further ensures that the neural network processor can respond quickly to external information without affecting execution process of tasks.

According to a first aspect of the present disclosure, a fault handling method for a neural network processor is provided, including:
obtaining fault information of the neural network processor;
determining a fault type of a faulty module in the neural network processor according to the fault information;
handling the fault in the faulty module using a preset regulation mode according to the fault type.

According to a second aspect of the present disclosure, a fault handling apparatus for a neural network processor is provided, including:
a fault information obtaining module, configured to obtain fault information of the neural network processor;
a fault type determination module, configured to determine the fault type of the faulty module in the neural network processor according to the fault information;
a fault handling module, configured to handle the fault in the faulty module using a preset regulation mode according to the fault type.

According to a third aspect of the present disclosure, a computer-readable storage medium is provided. The storage medium stores a computer program, which is used for implementing the aforementioned fault handling method for neural network processor.

According to a fourth aspect of the present disclosure, an electronic device is provided, including:
a neural network processor;
a memory, configured to store executable instructions for the neural network processor;
a neural network processor, configured to read the executable instructions from the memory, and execute the instructions to implement the aforementioned fault handling method for neural network processor.

Compared with existing technologies, the fault handling method and apparatus for the neural network processor provided in the present disclosure offer at least the following advantages:

Compared with traditional fault handling methods, the disclosed embodiments do not immediately restart the entire neural network processor or even the entire system (e.g., autonomous driving system) upon detecting a fault. Instead, the fault information of the neural network processor is first obtained, and the fault type of the faulty module in the neural network processor is determined based on fault information; then a preset regulation mode is used according to the fault type to handle the fault in the faulty module. This enables the neural network processor to be quickly restored to a normal working state and continue executing tasks that were interrupted by the fault, thereby improving fault handling efficiency of the neural network processor. This ensures that the autonomous driving system can respond quickly to external information without affecting the execution progress of tasks.

### BRIEF DESCRIPTION OF THE DRAWINGS

FIG. 1 is a schematic diagram of a structure of a fault handling system for a neural network processor according to an exemplary embodiment of the present disclosure;
FIG. 2 is a schematic flowchart of a fault handling method for a neural network processor according to an exemplary embodiment of the present disclosure;
FIG. 3 is a schematic flowchart of steps S201 and S202 in the fault handling method for a neural network processor according to an exemplary embodiment of the present disclosure;
FIG. 4 is a schematic flowchart of step S203 in the fault handling method for a neural network processor according to an exemplary embodiment of the present disclosure;
FIG. 5 is a schematic diagram of a structure of a neural network processor according to an exemplary embodiment of the present disclosure;
FIG. 6 is a schematic flowchart of step S401 in the fault handling method for a neural network processor according to an exemplary embodiment of the present disclosure;
FIG. 7 is another schematic flowchart of step S203 in the fault handling method for a neural network processor according to an exemplary embodiment of the present disclosure;
FIG. 8 is a schematic flowchart of procedures prior to handling faults in a faulty module in the fault handling method for a neural network processor according to an exemplary embodiment of the present disclosure;
FIG. 9 is yet another schematic flowchart of step S203 in the fault handling method for a neural network processor according to an exemplary embodiment of the present disclosure;
FIG. 10 is a schematic flowchart of step S901 in the fault handling method for a neural network processor according to an exemplary embodiment of the present disclosure;
FIG. 11 is a schematic diagram of a structure of a fault handling apparatus for a neural network processor according to an exemplary embodiment of the present disclosure;
FIG. 12 is a schematic diagram of a structure of a first type of fault handling module 113 in the fault handling apparatus for a neural network processor according to an exemplary embodiment of the present disclosure;
FIG. 13 is a schematic diagram of a structure of a second type of fault handling module 113 in the fault handling apparatus for a neural network processor according to an exemplary embodiment of the present disclosure;
FIG. 14 is a schematic diagram of a structure of a third type of fault handling module 113 in the fault handling apparatus for a neural network processor according to an exemplary embodiment of the present disclosure;
FIG. 15 is a schematic diagram of a structure of a fault information obtaining module 111 in the fault handling apparatus for a neural network processor according to an exemplary embodiment of the present disclosure;
FIG. 16 is a diagram of a structure of an electronic device according to an exemplary embodiment of the present disclosure.

### DETAILED DESCRIPTION OF THE EMBODIMENTS

To explain this disclosure, exemplary embodiments of this disclosure are described below in detail with reference to accompanying drawings. Obviously, the described embodiments are merely a part, rather than all of embodiments of this disclosure. It should be understood that this disclosure is not limited by the exemplary embodiments.

It should be noted that unless otherwise specified, the scope of this disclosure is not limited by relative arrangement, numeric expressions, and numerical values of components and steps described in these embodiments.

### Overview of this disclosure

Neural Networks (NN) have been successfully applied in fields such as image processing and speech analysis. For example, Convolutional Neural Networks (CNN) are widely used in assisted driving, security monitoring, human-computer interaction, industrial control, and other domains.

Taking an autonomous driving system as an example, after training a neural network model, a neural network processor can be employed to handle tasks like target recognition and image classification. For instance, based on perceptual data (e.g., sound, images) obtained from onboard sensors (cameras, infrared, Lidar (Light Detection and Ranging), Radar (millimeter-wave radar), etc.) as input data, the neural network processor executes compiled neural network models to process this perceptual data, to perform various tasks (such as target detection, target classification, target recognition, and image segmentation), and to obtain output data. For example, in target detection tasks, the neural network's output may include bounding boxes indicating potential locations of target objects. For another example, in target classification tasks, the output data of the neural network can be scoring data of a detected object in a certain category or multiple categories, indicating the likelihood that the object belongs to a certain category.

If a neural network processor encounters faults during computation, such as timeouts, illegal instructions, computational logic faults, or SRAM ECC faults (static random-access memory faults), the operation result may be inconsistent with expected result. In one application scenario, in an target classification task, the inconsistency between the operation result and the expected result may be reflected in the deviation between the scoring value of a certain classification of a detected object output by the neural network and the expected result. Generally, in safety-critical systems (e.g., autonomous driving systems), relevant fault detection mechanisms are implemented to detect faults in neural network processor and perform corresponding fault handling. In related technologies, some faults in neural network processors may be detected, such as timeouts, illegal instructions, computational logic faults, or SRAM ECC faults. However, when an autonomous driving system detects a fault in the neural network accelerator or receives a fault signal indication reported by the neural network accelerator, it typically discard current computation results immediately, restarts the neural network processor, or even restarts the entire system. However, this restart process is time-consuming, and during the restart process, the neural network processor cannot normally handle the requirements of the autonomous driving system. At the same time, the tasks of the autonomous driving system may also be interrupted. Therefore, after restarting the neural network processor, the computing task must be performed again. This method is not conducive for the autonomous driving system to respond quickly to external information, which is not only affects the execution progress of tasks, but may also affect the safety of the autonomous driving system.

Compared to related technologies, the fault handling method for neural network processors provided in the embodiments of the present disclosure does not immediately discard computation results, restart the neural network processor or restart the entire autonomous driving system upon detecting a fault or receiving a fault signal indication reported by the neural network processor. Instead, the fault type of the faulty module in the neural network processor is first determined based on fault information, then the corresponding regulation mode is selected to handle the fault in the faulty module. This enables the neural network processor to be quickly restored to a normal working state and continue executing tasks that were interrupted by the fault, thereby improving fault handling efficiency of the neural network processor. This ensures that the autonomous driving system can respond quickly to external information without affecting execution progress of tasks.

### Exemplary system

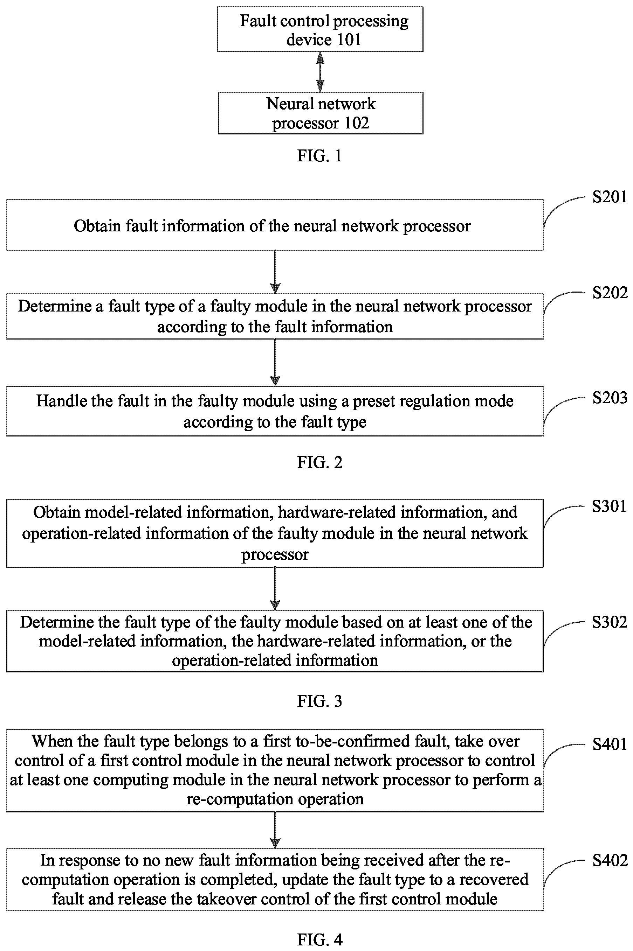

FIG. 1 is a schematic diagram of a structure of a fault handling system for a neural network processor according to an exemplary embodiment of the present disclosure. As shown in FIG. 1, the system includes: a fault control processing device 101, and a neural network processor 102 connected to the fault control processing device 101.

In an exemplary embodiment of the present disclosure, the fault control processing device 101 may first detect or collect fault information of the neural network processor 102, and then evaluate and analyze the fault information to determine a fault type of a faulty module in the neural network processor, and thereafter, according to the fault type, use a preset regulation mode to handle faults in the faulty module of the neural network processor 102. It can be seen that the technical solution provided by the embodiments of the present disclosure, when a fault of the neural network processor is found or a fault signal indication reported by the neural network processor is received, instead of immediately discarding the current computation results, restarting the neural network processor or restarting the entire autonomous driving system, the fault type of the fault in the neural network processor 102 is determined by the method described above, and then a corresponding regulating mode is selected for fault handling according to the fault type, so that the neural network processor can be quickly restored to a normal working state and continue executing the task that were interrupted by the fault, thereby improving the fault handling efficiency of the neural network processor and ensuring that the autonomous driving system can respond quickly to external information without affecting the execution process of tasks.

### Exemplary method

FIG. 2 is a schematic flowchart of a fault handling method for a neural network processor according to an exemplary embodiment of the present disclosure.

A neural network processor in the present disclosure may refer to any form of processing unit with data processing capabilities and/or instruction execution capabilities, such as a general-purpose processor CPU, a graphics processor GPU, an application-specific integrated circuit ASIC, a field-programmable gate array FPGA, etc., or it may be a specialized neural network processor or accelerator, etc. The neural network processor may be configured such that its working state is detected and/or monitored as soon as it is activated (e.g., energized) to detect and/or monitor fault information and perform fault handling accordingly. As shown in FIG. 2, an exemplary embodiment of the present disclosure provides a fault handling method for a neural network processor, comprising at least the following steps:

Step S201, obtaining fault information of the neural network processor.

With reference to FIG. 1, the fault control processing device 101 may collect relevant fault information by detecting whether certain faults occur in the neural network processor 102. For example, a plurality of fault detection units or an integrated single fault detection unit associated with external interfaces, computational logic, internal buffer memory, and the like of the neural network processor 102 may be provided in the fault control processing device 101 to determine whether the working state of the various modules of the processor is in a normal state or in a state in which a fault has occurred.

In an embodiment, the fault detection unit may detect whether the program code currently running on the neural network processor 102 has been altered/distorted. If the currently running program code is altered/distorted, a program fault may be indicated and related fault information may be collected.

In an embodiment, the fault detection unit may detect whether the code, position, etc. of each communication interface of the neural network processor 102 is consistent with the preset code, position, etc.. When there is an inconsistency in the code, position, etc. of some or all of the communication interfaces, it may be indicated that an interface fault has occurred, and the relevant fault information may be collected.

In an embodiment, the fault detection unit may detect whether the neural network processor 102 is unresponsive or has a prolonged response time when executing an operation. When a prolonged response time occurs, a time out fault may be indicated and relevant fault information may be collected.

In addition, the fault control processing device 101 may also collect fault information reported by the neural network processor 102. In an embodiment, the neural network processor 102 may report the detected fault information to the fault control processing device 101 by detecting the working state of various portions such as its external interfaces, neural network computational logic, internal buffer memory, etc. For example, a plurality of detection units or integrated single detection unit associated with the external interfaces, computational logic, internal buffer memory, etc. may be provided in the neural network processor 102 to determine whether the working state of each module of the processor is in a normal state or in a state in which a fault has occurred, and to report the detected fault information to the fault control processing device 101.

In one embodiment, the detection unit may detect whether a fault related to neural network operations has occurred in the network layer of the neural network processor 102. For example, upon detecting a fault in one of the units of the convolutional (conv) layer, the fully connected (FC) layer, or the classification (e.g., softmax) layer, a computational logic fault may be indicated and the detected failure information may be reported to the fault control processing unit 101.

In an embodiment, the detection unit may detect whether the number and type of an arithmetic logic unit (ALU) of the neural network processor 102 has a fault. For example, when a mismatch in the number and type of convolution (conv), pooling (pooling), drive (move), etc., with the preset number and type is detected, an arithmetic logic unit (ALU) number and type fault may be indicated, and the detected fault information can be reported to the fault control processing device 101.

In an embodiment, an error in the position of the MAC address of the neural network processor 102 in the array may be detected by the detection unit. For example, upon detecting that the position of the MAC address of the neural network processor 102 in the array is misplaced or changed, it may indicate an error in the position of the MAC in the array, and the detected fault information may be reported to the fault control processing device 101.

In an embodiment, the detection unit may detect whether a fault occurs in the internal storage process of the neural network processor 102. For example, in storing the intermediate results of the convolutional operation in the internal static random access memory (sram), upon detecting a fault of position and address of the sram, it may indicate an error in the position and address of the static random access memory (sram), and the detected fault information may be reported to the fault control processing unit 101.

Step S202, determining a fault type of the faulty module in the neural network processor according to the fault information.

The fault control processing device 101 may evaluate and analyze the fault information collected as described above, and determine a fault type of the faulty module in the neural network processor 102 based on the evaluation and analysis results.

The fault types typically include recoverable faults (transient recoverable faults), unrecoverable faults (permanent unrecoverable faults), and to-be-confirmed faults (i.e., faults that have not yet been confirmed as either transient or permanent).

Step S203, handling the fault of the faulty module using a preset regulation mode according to the fault type.

The preset regulation modes include, for example, a re-computation mode and a restart mode.

In practice applications, a correspondence between the fault type and the regulation mode may be established in advance, and after determining the fault type of the neural network processor, the corresponding regulation mode may be selected according to the correspondence to process the faulty module in the neural network processor in which the fault occurs, thereby promptly eliminating the fault and restoring the normal working state of the neural network processor.

The fault handling method for the neural network processor provided by the present embodiment includes at least the following beneficial effects:

Compared to the related technology, when a fault is detected in the neural network processor or a fault signal indication reported by the neural network processor is received, a fault type of the faulty module in the neural network processor will first be determined according to the fault information, and then a corresponding regulation mode will be selected based on the fault type to handle the fault in the faulty module, which may enable the neural network processor to be quickly restored to a normal working state, and continue executing the task that were interrupted by the fault, thus improving the fault handling efficiency of the neural network processor, which is conducive to ensuring that the neural network processor can respond quickly to external information without affecting the execution process of tasks.

It should be noted that the fault handling method provided by the embodiments of the present disclosure can be applied not only to a number of technical fields such as assisted driving, autonomous driving, driver monitoring, human-computer interaction, and so on, but also to other scenarios requiring the use of a neural network processor such as aerospace vehicles, unmanned aerial vehicles, and industrial control fields.

As shown in FIG. 3, on the basis of the embodiment shown in FIG. 2 above, in an exemplary embodiment of the present disclosure, the step S201, which shows obtaining fault information of the neural network processor, may specifically include:

Step S301, obtaining model-related information, hardware-related information, and operation-related information of the faulty module in the neural network processor.

In a deep neural network model, the computation of many network layers is generally included. In the computation of each network layer, there are many different types of computation, such as including convolution, full connection, pooling, scaling, transformation, activation function computation, and so on, and also including tensor or vector operations, and so on. For convolutional computation, it can be further subdivided into depthwise convolution (only changing the size of the feature map, not changing the number of channels), pointwise convolution (not changing the size of the feature map, only changing the number of channels), and so on.

The neural network processor may comprise a plurality of constituent modules, which may include a storage module, a plurality of feedback control modules, a plurality of computing modules, and an internal control module, among others. A faulty module is one or more of the aforementioned constituent modules of the neural network processor that has a fault during operation. For example, if one of the computing modules 01 has a fault during the operation of the neural network processor, the faulty module is the computing module 01.

Based on a processing step in which the neural network accomplishes a certain operation, reasoning, recognition, and control task, in the process of running the neural network model by the neural network processor, the information to be collected includes model-related information corresponding to the above-described deep neural network model, hardware-related information corresponding to the various modules of the neural network processor, and operation-related information.

The model-related information includes information on the computation layer, the computation type and other aspects of the neural network type to which the current computation of the faulty module in which the fault occurs belongs.

The hardware-related information includes information about the faulty module, as well as information about the type classification (e.g., control part, computation part, storage part) of the faulty module.

The operation-related information, including information related to data dependency, i.e., information about the data impact of the current fault on the computing module.

As shown in FIG. 3, the step S202 of determining a fault type of a faulty module in the neural network processor according to the fault information may specifically include:

Step S302, determining the fault type of the faulty module based on at least one of the model-related information, the hardware-related information, or the operation-related information.

Based on the model-related information, the hardware-related information, and the operation-related information, a specific fault location of the faulty module of the neural network processor that is currently malfunctioning can be accurately located, as well as the cause of the fault. Specifically, by collecting and analyzing model-related information, it can be determined in which network layer of the neural network model the fault occurs in the current execution phase. Further, it can be determined at which convolutional computation or pooling operation in that network layer is failing. For another example, when compiling a neural network model for execution on a neural network processor via a compiler, it may be possible to split a certain computation in a layer network into multiple computational steps, for example, splitting a complete conv (convolution) computation into a sequence of 10 smaller sub-conv (sub-convolution) computations, whereupon the fault information may be located to a specific sub-conv. By collecting and analyzing the hardware-related information, it can be determined that the faulty module is the convolution module, pooling module, transformation module, and other such computing modules in neural network processing; or process control, internal storage access control and other such control modules; or the related modules in the data storage module composed of sram. By collecting and analyzing the operation-related information, it can be determined whether the faulty module affects the data flow of the computing module of the neural network, and so on. For example, the space where the output results of conv (convolution) are stored in the sram (static random access memory) may overlap or partially overlap with the input data space of conv. In this case, during the computation of conv, its computation results will directly overwrite the input data of conv. At this time, if conv fails, it will affect the input data of its own module. For another example, conv (convolution) and pooling are computed at the same time, and the output of conv may overwrite the input of pooling, at this time, if conv fails, it will affect the input data of the pooling module. If the storage module has a fault, the information also includes the location in the computation flow where the faulty data is located. For example: whether the fault occurs the input data in the current conv (or sub-conv) computation, in the intermediate results of the conv computation, or in the final computation result of the conv computation.

Further, it may be determined whether the fault type of the faulty module in the neural network processor that has a fault is a recoverable fault, a permanent fault, or a to-be-confirmed fault, based on the above-determined cause of the fault and the location of the fault, and the like.

An alternative way of classifying the fault type is to determine that if the control circuit fails during the original calculation (e.g., if a hardware redundancy mechanism of the control circuitry gives a fault alert) and the control circuit still fails after the re-computation, then it can be determined that this is a "permanent fault" (or an "unrecoverable fault"). If, after the re-computation, the control circuit does not fail again, then it can be determined that it is a "transient fault" (or a "recoverable fault").

In the present embodiment, by using at least one of the received model-related information, hardware-related information, and operation-related information, the cause and location of the faulty module of the neural network processor that is currently malfunctioning can be quickly and accurately located, and the corresponding fault type can be determined.

FIG. 4 illustrates a schematic flowchart of one of the steps S203 in the embodiment as shown in FIG. 2. As shown in FIG. 4, on the basis of the embodiment shown in FIG. 2 above, in an exemplary embodiment of the present disclosure, the step S203 of handling a fault in a faulty module using a preset regulation mode according to the fault type may specifically include the following steps:

Step S401, when the fault type belongs to a first to-be-confirmed fault, taking over control of the first control module in the neural network processor to control at least one computing module in the neural network processor to perform a re-computation operation.

Step S402, in response to no new fault information being received after the re-computation operation is completed, updating the fault type to a recovered fault and releasing the takeover control of the first control module.

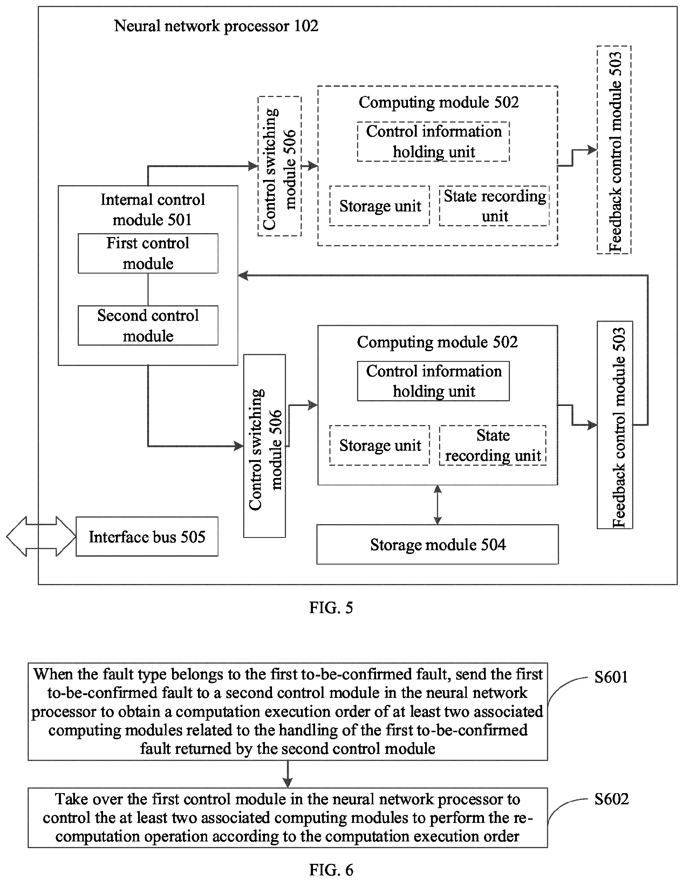

FIG. 5 illustrates a schematic diagram of a structure of a neural network processor according to an exemplary embodiment of the present disclosure. As shown in FIG. 5, the neural network processor 102 may include an internal control module 501, a computing module 502, a feedback control module 503, a storage module 504, an interface bus 505, and a control switching module 506.

In conjunction with FIGS. 1 and 5, the internal control module 501, typically refers to an internal control scheduling module relative to the fault control processing device 101 external to the neural network processor. The internal control module 501 is responsible for controlling and scheduling neural network computations for one or more computing modules 502. The internal control module 501 may include a first control module and a second control module.

The computing module 502, is primarily used for computation of the neural network, or a portion of the computation in the neural network computation. The computing module 502 may include a control information holding unit, a storage unit, and a state recording unit.

The control information holding unit, which may be used to save control information necessary for re-computation of the computing module 502, ensures that the control information is not overwritten or erased until the computing module 502 has completed the computation, to enable the computing module 502 to re-compute under the control of the internal control module 501. In addition, configuration information necessary for a current computation by the computing module 502, or multiple configuration information that has been completed in the history of the computing module 502, may be saved, and the validity of the configuration information may also be marked. For example, the configuration information for the last 4 calculations of the pooling computing module. If the input data stored in sram required for one of those 4 pooling calculations has been overwritten, the historical configuration is recorded as an invalid configuration.

A storage unit (memory) that can be used to save the inputs, intermediate results, and final computation results of the computing module 502.

A state recording unit, which may be used to record various information related to this computing module 502, including model information, hardware information, data dependency information, and other contents. Among them, the model information may be written to the state recording unit by the internal control module of the NN (neural network) processor through a specific interface when performing the computation scheduling, or it may be passed to the computing module 502 through a specific information segment in the control instruction, and then saved in the state recording unit. The hardware information may be information such as the computation process, the computation flow, the computation status, and the fault status recorded by the computing module. The data dependency information may be written into the state recording unit by the internal control module 501 of the NN (neural network) processor through a specific interface when performing computation scheduling, or it may be passed to the computing module 502 through a specific information segment in the control instruction and then saved in the state recording unit, or it may be information obtained by this computing module 502 in mutual communication with other computing modules. The fault control processing device 101 may obtain such information recorded by the above-described state recording unit for subsequent judgment and control use.

The feedback control module 503, which may be used to feedback the state of the re-computation operation of the computing module 502 to the internal control module 501. The feedback control module 503 may also be used to switch the state signals output by the computing module 502 performing the re-computation operation. For example, when a fault is detected, the re-computation state output signal is selected to be used as the last output signal instead of the state output signal of the first normal calculation.

The interface bus 505, may be used for data exchange transmission between the neural network processor 102 and the fault control processing device 101.

The control switching module 506, may control the computing module 502 to switch between two modes of internal control and external control. It is in the internal control mode under normal circumstances. When a fault occurs in the computing module 502, it can be switched to the external control mode, which is taken over by the fault control processing device external to the NN processor, to control the behavior of this computing module 502. The external control mode may allow the computing module 502 to switch between a functional mode, a re-computation mode, and a self-test mode through the control switching module 506. For example, the external control mode may directly control this computing module 502 to perform a REPLAY computation (or enter a TEST mode to perform a test), or it may choose to allow the faulty computing module 502 to continue executing until the computation is complete, and then control this computing module 502 to perform a REPLAY computation.

In an exemplary embodiment, when the fault control processing device 101 detects a fault in the neural network processor, it may analyze the detected fault information, and if, after analysis, it is determined that the fault type of the faulty module in the neural network processor that has a fault currently is a first to-be-confirmed fault, such as an error in convolutional computation logic, then it takes over the control authority of the first control module in the internal control module 501 released by the neural network processor, and controls at least one computing module 502 of the neural network processor to perform a re-computation operation (i.e., a replay operation). At the same time, the state of the computing module 502 performing the re-computation operation may be fed back to the internal control module 501 through communication with the feedback control module 503, so that the internal control module 501 coordinates the controls the computation of the other computing modules in accordance with the feedback notification. If no new fault information is received after the above-described computing module 502 that performs the re-computation operation ends (completes) the re-computation operation, the fault type of the faulty module in the neural network processor that has a fault currently is updated to a recovered fault, and at the same time the take-over control of the first control module is released, i.e., the control authority of the first control module is handed over to the internal control module 501 of the neural network processor, so that the neural network processor can continue to perform subsequent computations.

In another feasible execution method, in response to receiving new fault information after the above-described computing module 502 that performs the re-computation operation ends (completes) the re-computation operation, the fault type is updated to an unrecoverable fault (or a permanent fault). At this time, the fault control processing device 101 may perform a restart operation (i.e., a RESET operation) on the NN processor or report it to an external system.

In this embodiment, when the fault control processing device 101 determines that the fault type of the faulty module in the neural network processor that has a fault currently is a first to-be-confirmed fault (e.g., an error in one of the convolutional computation logics in the computing module 502), it takes over the first control module in the internal control module 501 in the neural network processor in order to control the computing module 502 that is currently experiencing an error in a convolutional computation logic to perform a re-computation. When the computing module 502 does not receive new fault information after the computing module 502 completes the re-computation operation, the fault type is updated to a recovered fault, and the first control module is released from the takeover control of the first control module, so that without restarting the neural network processor, or even restarting the system, the neural network processor can be quickly restored to a normal working state. This improves the fault handling efficiency of the neural network processor, and ensures that the autonomous driving system can respond quickly to external information without affecting the execution process of tasks.

FIG. 6 illustrates a schematic flowchart of step S401 in an embodiment as shown in FIG. 4. As shown in FIG. 6, on the basis of the embodiment shown in FIG. 4 above, in an exemplary embodiment of the present disclosure, taking over (shown in the step S401) control of the first control module in the neural network processor when the fault type belongs to the first to-be-confirmed fault in order to control the at least one computing module in the neural network processor to perform a re-computation operation may specifically comprise the following steps:

Step S601, when the fault type belongs to the first to-be-confirmed fault, sending the first to-be-confirmed fault to the second control module in the neural network processor to obtain the computation execution order of the at least two associated computing modules related to the handling of the first to-be-confirmed fault returned by the second control module;

Step S602, taking over the first control module in the neural network processor to control the at least two associated computing modules to perform a re-computation operation according to the computation execution order.

In the neural network processor, there may be not only one computing module, but a plurality of computing modules. The plurality of computing modules may have the same functional structure or may be computing modules with different functional structures. There may be some kind of data dependency between the plurality of computing modules, such as the computation of a certain computing module is dependent on the computation results output by another computing module. Therefore, when the fault control processing device 101 determines, based on the evaluation and analysis results of the collected fault information, that the neural network processor may currently involve at least two computing modules in a fault, and that the fault type of the fault is a first to-be-confirmed fault, it sends this first to-be-confirmed fault to the second control module in the neural network processor. Receive a computation execution order of the at least two associated computing modules returned by this second control module in connection with the processing of the first to-be-confirmed fault. Take over the control authority of the first control module released by the neural network processor, and control the at least two associated computing modules described above to perform a re-computation operation in accordance with this computation execution order.

An associated computing module is typically a module that has a data dependency relationship between the computing modules. For example, if the output result of the computing module 01 is an input to the computing module 02, and the output result of the computing module 02 is an input to the computing module 03, then the computing module 01, the computing module 02, and the computing module 03 may be considered to be associated computing modules.

Exemplarily, when the fault control processing device 101 receives the computation execution order of the at least two associated computing modules returned by the second control module in relation to the processing of the first to-be-confirmed fault as the computing module 01 → the computing module 02 → the computing module 03. Then, the fault control processing device 101, after taking over the control authority of the first control module released by the neural network processor, may first control the computing module 01 to perform the re-computation operation. At the same time, the computing module 01 may be controlled to send the status of its re-computation operation (e.g., not computed, calculation in progress, end of calculation, etc.) to the associated computing module 02 and the computing module 03. After the calculation of the computing module 01 is finished, the computing module 02 will then be controlled to perform the re-computation operation, and after the calculation of the computing module 02 is finished, the computing module 03 will then be controlled to perform the re-computation operation.

It should be noted that if the computation of the computing module 02 or the computing module 03 depends on the computation result of the computing module 01, or needs to be computed after the computation of the computing module 01 is finished, then the computing module 02 or the computing module 03 needs to wait for the computing module 01 to finish performing the re-computation operation. Otherwise, the computing module 02 or the computing module 03 may freely perform the re-computation operation without waiting for the computing module 01 to finish the calculation.

In this embodiment, when the faulty module in which the neural network processor is currently malfunctioning involves a plurality of computing modules, and the fault type in which the malfunctioning is confirmed to be a first to-be-confirmed fault, it may send the first to-be-confirmed fault to the second control module, and, after obtaining the computation execution order of at least two associated computing modules returned by the second control module in connection with the processing of the first to-be-confirmed fault, it may take over the first control module in the neural network processor to control the at least two associated computing modules to perform a re-computation operation in accordance with the computation execution order, which may ensure the accuracy and reliability of the re-computation results of the computing modules.

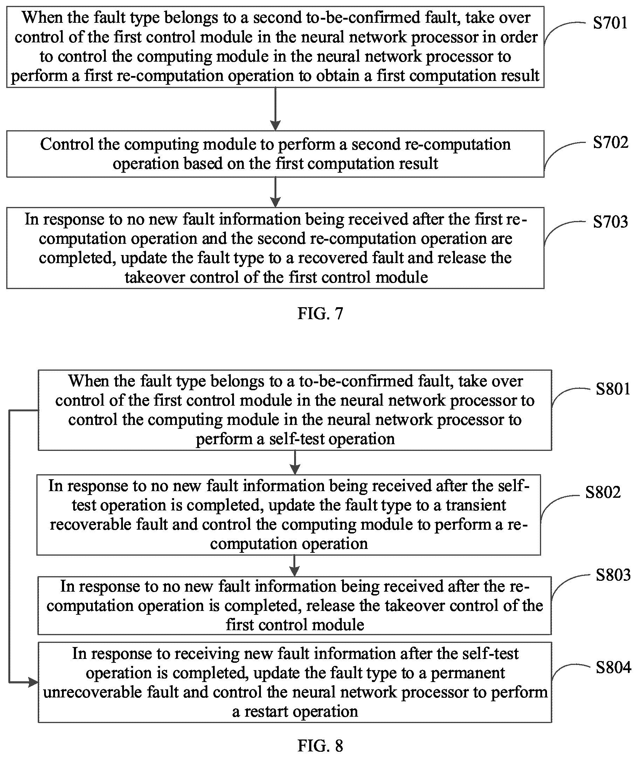

FIG. 7 illustrates another schematic flowchart of step S203 in the embodiment as shown in FIG. 2. As shown in FIG. 7, on the basis of the embodiment shown in FIG. 2 above, in an exemplary embodiment of the present disclosure, the step S203 shown in which a fault in the faulty module is processed according to the fault type using a preset regulation mode may specifically include the following steps:

Step S701, when the fault type belongs to a second to-be-confirmed fault, taking over control of a first control module in the neural network processor in order to control a computing module in the neural network processor to perform a first re-computation operation to obtain a first computation result.

Step S702, controlling the computing module to perform a second re-computation operation based on the first computation result.

Step S703, in response to no new fault information being received after the first re-computation operation and the second re-computation operation are completed, updating the fault type to a recovered fault, and releasing the takeover control of the first control module.

In an exemplary embodiment, an ecc error occurs in the sram (static random access memory) of the neural network processor 102, and the fault control processing device 101 determines, after analyzing based on the collected fault information, that it is an error in the input data of the conv calculation, and traces back by the data dependency information therein, that the input data is a computational result of a previous pooling computation. If it is found upon further detection and analysis that the configuration information of the previous pooling calculation still exists in the control information holding unit of the corresponding computing module, and the validity identifier of the configuration information is valid (indicating that the corresponding input data is still valid in the sram and has not been overwritten by other data), then it may be determined that the fault type of the current fault in the neural network processor 102 is a second to-be-confirmed Fault. Next, the fault control processing device 101 may take over control of the first control module in the neural network processor and control the computing module in the neural network processor to perform a first re-computation operation of the pooling computation to obtain a first computation result. Then, using this first computation result as an input, a second re-computation operation of the faulty conv computation is then controlled to perform a second re-computation operation. If no new fault information is received after both the above-described first re-computation operation and the second re-computation operation are completed, the fault type is updated to a recovered fault, and the takeover control of the first control module is released. If new fault information is received after the above-described first re-computation operation and/or the second re-computation operation is completed, the fault type is updated to a unrecoverable fault (or a permanent fault). At this time, the fault control processing device 101 may perform a restart operation on the NN processor or report it to an external system.

In this embodiment, when the fault control processing device 101 determines that the fault type of the faulty module in the neural network processor that has a fault currently is a second to-be-confirmed fault, it may, by taking over a first control module in an internal control module in the neural network processor, in order to control the computing module in the neural network processor to perform a first re-computation operation to obtain a first computation result; and then, using the first computation result as an input, the control the computing module to perform a second re-computation operation; and when no new fault information is received after the execution of the above first and second re-computation operations, updating the fault type to a recovered fault and releasing the takeover control of the first control module without restarting the neural network processor or even restarting the system, which enables the neural network processor to be quickly restored to a normal working state and improves the fault handling efficiency of the neural network processor. This can ensure that the autonomous driving system can respond quickly to external information without affecting the execution process of tasks.

FIG. 8 illustrates a schematic flowchart of before a fault in a faulty module is processed using a preset regulation mode according to the fault type in the embodiment shown in FIGS. 4, 6, and 7.

As shown in FIG. 8, on the basis of the embodiments shown in FIGS. 4, 6, and 7 above, in an exemplary embodiment of the present disclosure, before the step of using the preset regulation mode to handle the fault in the faulty module according to the fault type, may specifically further include the following steps:
Step S801, when the fault type belongs to a to-be-confirmed fault, taking over control of the first control module in the neural network processor to control the computing module in the neural network processor to perform a self-test operation.
Step S802, in response to no new fault information being received after the self-test operation is completed, updating the fault type to a transient recoverable fault and controlling the computing module to perform a re-computation operation.
Step S803, in response to no new fault information being received after the re-computation operation is completed, releasing the takeover control of the first control module. Alternatively,
Step S804, in response to receiving new fault information after the self-test operation is completed, updating the fault type to a permanent unrecoverable fault and controlling the neural network processor to perform a restart operation.

In an exemplary embodiment, the fault control processing device 101, upon detecting that a fault has occurred in the neural network processor and determining that the fault type for which the fault has occurred is a to-be-confirmed fault, may control the computing module in the neural network processor where the fault occurs to perform a self-test operation by taking over control of the first control module in the neural network processor. For example, the computing module is controlled to perform a test of its computing array using a preset test mode. If no new fault information is received after the self-test operation is completed, updating the fault type to a transient recoverable fault and controlling the computing module to perform a re-computation operation. If no new fault information is received after the re-computation operation is completed, the takeover control of the first control module is released. If the new fault information is received after the self-test operation is completed, the fault type is updated to a permanent unrecoverable fault, and the neural network processor is controlled to perform a restart operation or to report to an external system.

The self-test operation may be an LBSIT test, a test of a test pattern or one of a plurality of different patterns or a combination of patterns. The pattern is a class in java.util.regex. A pattern is a compiled representation of a regular expression. It may also be a customized other test pattern.

In this embodiment, when a fault of the neural network processor is found and a fault type of the fault is determined to be a to-be-confirmed fault, the first control module of the neural network processor is taken over by the fault control processing device 101 and the computing module in which the fault occurs is controlled to perform a self-test operation first, and then, based on the results of the self-test operation, it is determined whether a further re-computation operation is required or not, which can improve the fault handling efficiency.

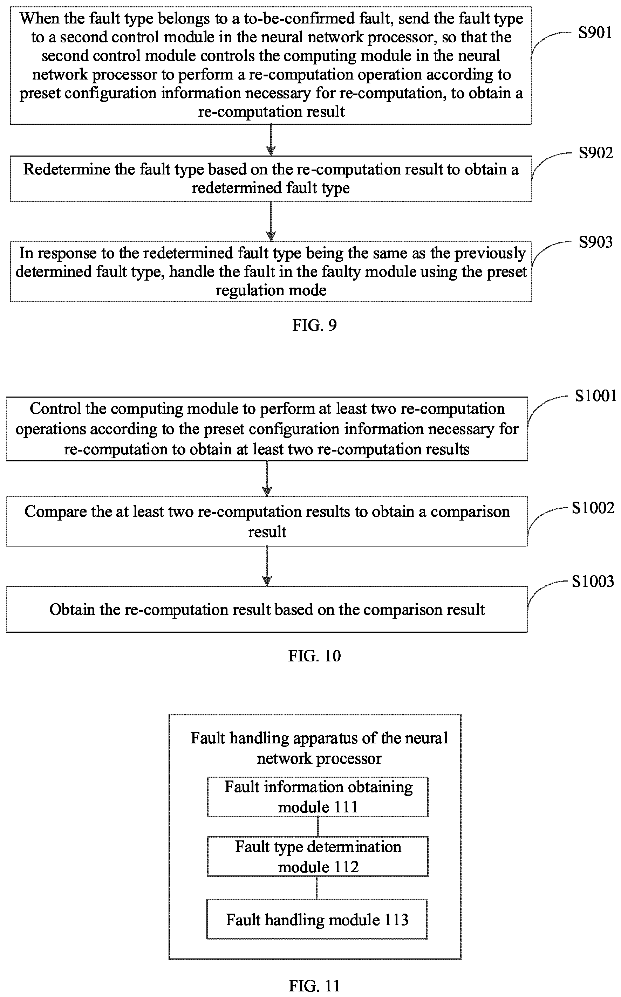

FIG. 9 illustrates yet another schematic flowchart of the step S203 in the embodiment as shown in FIG. 2. As shown in FIG. 9, on the basis of the embodiment shown in FIG. 2 above, the step S203, in an exemplary embodiment of the present disclosure, may specifically include the following steps:
Step S901, when the fault type belongs to a to-be-confirmed fault, sending the fault type to the second control module in the neural network processor, so that the second control module controls the computing module in the neural network processor to perform a re-computation operation according to preset configuration information necessary for re-computation to obtain a re-computation result.
Step S902, redetermining the fault type based on the re-computation results to obtain the redetermined fault type.
Step S903, in response to the redetermined fault type being the same as the previously determined fault type, handling the fault in the faulty module using the preset regulation mode.

The preset configuration information necessary for the re-computation may include a validity identifier of the configuration information, configuration information related to a current one-time or historical multiple times of calculations of the calculation holding module, and the like.

In an exemplary embodiment, when the fault control processing device 101 detects a fault in the neural network processor and determines that the fault type of the fault is a to-be-confirmed fault, it may, by sending the fault type to the second control module in the neural network processor, so that the second control module controls the computing module in the neural network processor to perform a re-computation operation according to the preset configuration information necessary for re-computation to obtain a re-computation result. The fault control processing device 101 redetermines the fault type of the current fault in the neural network processor based on the re-computation results returned by the second control module, to obtain the redetermined fault type. It is assumed that the redetermined fault type is the first to-be-confirmed fault, and the previously determined fault type is also the first to-be-confirmed fault, i.e., both are the same. Then, a subsequent process shown in the embodiment shown in FIG. 4 above may be further performed by taking over control of the first control module in the neural network processor.

In this embodiment, when the fault control processing device 101 determines that the fault type of the current fault in the neural network processor is a to-be-confirmed fault, it may first send the fault type to the second control module, so that the second control module controls the computing module of the neural network processor to perform a re-computation operation, to obtain a re-computation result. Next, if the fault control processing device 101, based on the re-computation result returned by the second control module, redetermines that the fault type is the same as the previously determined fault type, it then takes over control of the first control module to control the computing module of the neural network processor to perform the re-computation operation. That is, the fault handling of the fault of the neural network processor is implemented by the cooperation between the internal control module (the second control module) of the neural network processor and the fault control processing device 101, which can improve the reliability of the fault handling results.

FIG. 10 illustrates a schematic flowchart in which the second control module in the embodiment shown in FIG. 9 controls a computing module in the neural network processor to perform a re-computation operation based on preset configuration information necessary for re-computation, to obtain a re-computation result.

As shown in FIG. 10, on the basis of the embodiment shown in FIG. 9 above, in an exemplary embodiment of the present disclosure, the second control module controls the computing module in the neural network processor to perform a re-computation operation to obtain a re-computation result based on the preset configuration information necessary for the re-computation, which may specifically include the following steps:
Step S1001, according to the preset configuration information necessary for re-computation, controlling the computing module to perform at least two re-computation operations, to obtain at least two re-computation results.
Step S1002, comparing the at least two re-computation results to obtain a comparison result.
Step S1003, obtaining the re-computation results based on the comparison results.

In an exemplary embodiment, the second control module may control the computing module of the neural network processor to perform at least two re-computations according to the preset configuration information necessary for the re-computations, wherein the at least two re-computations are hash computations, thereby obtaining the at least two hash values, and each of the hash values may be stored separately in a different storage space for subsequent reading. Then, the at least two hash values are compared, and the comparison may be made in a manner to determine whether the at least two hash values are the same. If the result of the comparison is that the at least two hash values are not identical, it is determined that the neural network processor still has a fault; and if the result of the comparison is that the at least two hash values are identical, it is determined that the neural network processor has no fault currently.

In some example, when it is determined that the neural network processor is still has a fault, the determination that the neural network processor still has a fault may also be returned to the fault control processing device 101.

In this embodiment, by controlling the computing module to perform at least two re-computation operations and comparing the at least two re-computation results, to obtain a comparison result. Then whether or not the neural network processor has a fault may be determined based on the comparison result, thereby ensuring the reliability of the results of the fault evaluation and analysis.

It should be noted that the above embodiment also requires the necessary processing of other fault detection mechanisms when performing the steps of the re-computation operation or the self-test operation. For example, when performing the re-computation operation control, the watchdog mechanism for timeout detection also needs to be processed. When controlling self-test operations, the watchdog mechanism for timeout detection and the disable mechanism must also be handled. The watchdog mechanism, or Linux watchdog, is a computer program that comes with Linux to monitor the operation of the system.

### Exemplary apparatus

According to the same idea as the method embodiments of the present disclosure, embodiments of the present disclosure also provide a fault handling apparatus for a neural network processor.

FIG. 11 illustrates a schematic diagram of a structure of a fault handling apparatus for a neural network processor according to an exemplary embodiment of the present disclosure.

As shown in FIG. 11, the fault handling device of the neural network processor provided by an exemplary embodiment of the present disclosure includes:
a fault information obtaining module 111, configured to obtain fault information of the neural network processor;
a fault type determination module 112, configured to obtain the fault information of the neural network processor and determine a fault type of a faulty module in the neural network processor according to the fault information; and
a fault handling module 113, configured to handle a fault in the faulty module using a preset regulation mode according to the fault type.

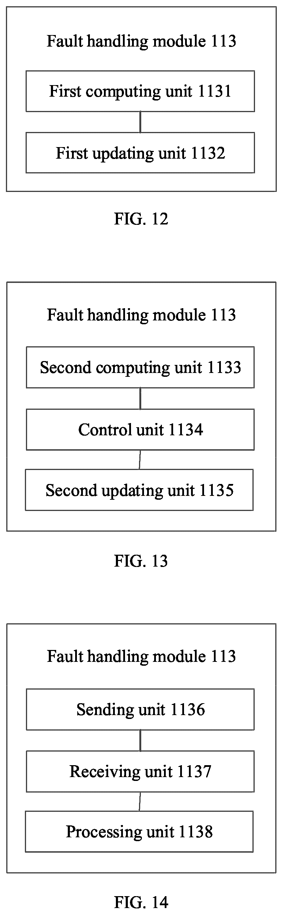

As shown in FIG. 12, in an exemplary embodiment of the present invention, the fault handling module 113 comprises:
a first computing unit 1131, configured to take over control of a first control module in the neural network processor to control at least one computing module in the neural network processor to perform a re-computation operation when the fault type belongs to a first to-be-confirmed fault; and
a first updating unit 1132, configured to update the fault type to a recovered fault in response to no new fault information being received after the re-computation operation is completed, and to release the takeover control of the first control module.

In an exemplary embodiment of the present invention, the above-described first computing unit 1131, may specifically comprise:
a sending component, configured to send the first to-be-confirmed fault to the second control module in the neural network processor when the fault type belongs to the first to-be-confirmed fault to obtain the computation execution order of at least two associated computing modules returned by the second control module in relation to the processing of the first to-be-confirmed fault; and
a takeover component, configured to take over the first control module in the neural network processor, to control the at least two associated computing modules to perform a re-computation operation in accordance with the computation execution order.

As shown in FIG. 13, in another exemplary embodiment of the present invention, the fault handling module 113 comprises:
a second computing unit 1133, configured to take over control of a first control module in the neural network processor to control a computing module in the neural network processor to perform a first re-computation operation to obtain a first computation result when the fault type belongs to a second to-be-confirmed fault;
a control unit 1134, configured to control the computing module to perform a second re-computation operation based on the first computation result; and
a second updating unit 1135, configured to update the fault type to a recovered fault in response to no new fault information being received after both the first re-computation operation and the second re-computation operation are completed, and to release the takeover control of the first control module.

On the basis of the embodiment of the present invention shown in FIGS. 12 and 13 above, the fault handling device, may further specifically comprise:
a self-test module, configured to take over control of the first control module in the neural network processor to control a computing module in the neural network processor to perform a self-test operation when the fault type belongs to a to-be-confirmed fault;
an update module, configured to update the fault type to a transient recoverable fault in response to no new fault information being received after the self-test operation is completed, and to control the computing module to perform a re-computation operation;
a release module, configured to release take-over control of the first control module in response to not receiving the new fault information after the re-computation operation is completed; and
a restart module, configured to update the fault type to a permanent unrecoverable fault in response to receiving the new fault information after the self-test operation is completed, and to control the neural network processor to perform a restart operation.

As shown in FIG. 14, in a further exemplary embodiment of the present invention, the fault handling module 113 comprises:
a sending unit 1136, configured to send the fault type to the second control module in the neural network processor when the fault type belongs to a to-be-confirmed fault, so that the second control module controls the computing module in the neural network processor to perform a re-computation operation based on preset configuration information necessary for re-computation, to obtain the re-computation result;
a receiving unit 1137, configured to redetermine the fault type based on the re-computation result, to obtain the redetermined fault type; and
a processing unit 1138, configured to handle the fault in the faulty module using a preset regulation mode in response to the fact that the redetermined fault type is the same as the previously determined fault type.

In one embodiment of the present invention, on the basis of the embodiment shown in Figure 14 above, the second control module described above comprises:
a re-computation unit, configured to control the computing module to perform at least two re-computation operations to obtain at least two re-computation results based on preset configuration information necessary for re-computation;
a comparison unit, configured to compare the at least two re-computation results to obtain a comparison result; and

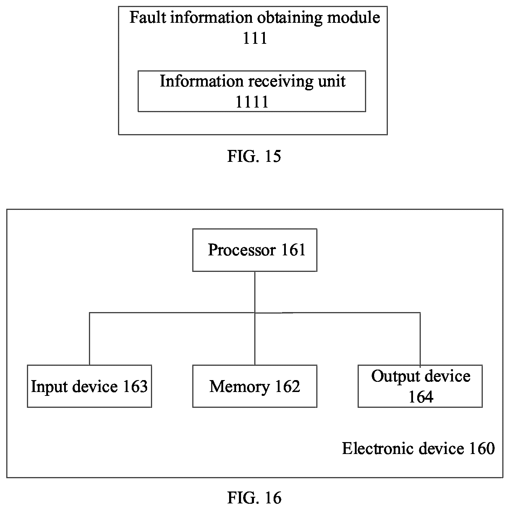

As shown in FIG. 15, in a further exemplary embodiment of the present invention, the fault information obtaining module 111 comprises: an information receiving unit 1111, configured to obtain model-related information, hardware-related information, and operation-related information of the faulty module in the neural network processor.

A fault type determination module 112 is configured to determine a fault type of the faulty module based on at least one of the model-related information, the hardware-related information, or the operation-related information.

### Exemplary electronic device

FIG. 16 is a diagram of a structure of an electronic device according to an exemplary embodiment of the present disclosure.

As shown in FIG. 16, the electronic device 160 includes one or more processors 161 and a memory 162.

The processor 161 may be a central processing unit (CPU) or another form of processing unit having a data processing capability and/or an instruction execution capability, and may control other components in the electronic device 160 to implement desired functions.

The memory 162 may include one or more computer program products, which may include various forms of computer readable storage media, such as volatile memory and/or non-volatile memory. The volatile memory may include, for example, random access memory (RAM) and/or cache. The non-volatile memory may include, for example, read-only memory (ROM), hard disk, and flash memory, etc. One or more computer program instructions may be stored on the computer-readable storage medium. The processor 161 may execute the one or more program instructions to implement the fault handling method and/or other desired functions of the neural network processor according to the various embodiments of the present disclosure described above.

In one example, the electronic device 160 may further include: an input device 163 and an output device 164. These components are connected to each other through a bus system and/or another form of connection mechanism (not shown).

Certainly, for simplicity, FIG. 16 shows only some of components in the electronic device 160 that are related to the present disclosure, and components such as a bus and an input/output interface are omitted. In addition, according to specific situations, the electronic device 160 may further include any other appropriate components.

### Exemplary computer program product and computer readable storage medium

In addition to the foregoing method and device, embodiments of this disclosure may also provide a computer program product, which includes computer program instructions. When the computer program instructions are executed by a processor, the processor is enabled to perform the steps of fault handling method for a neural network processor according to the embodiments of this disclosure, that are described in the "exemplary method" section described above.

The computer program product may be program code, written with one or any combination of a plurality of programming languages, that is configured to perform the operations in the embodiments of this disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, the embodiments of this disclosure may further relate to a computer readable storage medium, which stores computer program instructions. When the computer program instructions are run by a processor, the processor is enabled to perform the steps of the method according to the embodiments of this disclosure, that are described in the "exemplary method" section described above.

The computer readable storage medium may be one readable medium or any combination of a plurality of readable media. The readable medium may be a readable signal medium or a readable storage medium. The readable storage medium includes, for example, but is not limited to electricity, magnetism, light, electromagnetism, infrared ray, or a semiconductor system, an apparatus, or a device, or any combination of the above. More specific examples (a non-exhaustive list) of the readable storage medium include: an electrical connection with one or more conducting wires, a portable disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above.

Basic principles of this disclosure are described above in combination with specific embodiments. However, advantages, superiorities, and effects mentioned in this disclosure are merely examples but are not for limitation, and it cannot be considered that these advantages, superiorities, and effects are necessary for each embodiment of this disclosure. In addition, specific details described above are merely for examples and for ease of understanding, rather than limitations. The details described above do not limit that this disclosure must be implemented by using the foregoing specific details.

A person skilled in the art may make various modifications and variations to this disclosure without departing from the spirit and the scope of this application. In this way, if these modifications and variations of this application fall within the scope of the claims and equivalent technologies of the claims of this disclosure, this disclosure also intends to include these modifications and variations.

## Claims

1. A fault handling method for a neural network processor, comprising:
obtaining fault information of the neural network processor;
determining a fault type of a faulty module in the neural network processor according to the fault information;
handling the fault in the faulty module using a preset regulation mode according to the fault type.

2. The method according to claim 1, wherein the handling the fault in the faulty module using a preset regulation mode according to the fault type comprises:
when the fault type belongs to a first to-be-confirmed fault, taking over control of a first control module in the neural network processor to control at least one computing module in the neural network processor to perform a re-computation operation;
in response to no new fault information being received after the re-computation operation is completed, updating the fault type to a recovered fault and releasing the takeover control of the first control module.

3. The method according to claim 2, wherein the taking over control of the first control module in the neural network processor to control at least one computing module in the neural network processor to perform a re-computation operation when the fault type belongs to the first to-be-confirmed fault comprises:
when the fault type belongs to the first to-be-confirmed fault, sending the first to-be-confirmed fault to a second control module in the neural network processor to obtain a computation execution order of at least two associated computing modules related to the handling of the first to-be-confirmed fault returned by the second control module;
taking over the first control module in the neural network processor to control the at least two associated computing modules to perform the re-computation operation according to the computation execution order.

4. The method according to claim 1, wherein the handling the fault in the faulty module using a preset regulation mode according to the fault type comprises:
when the fault type belongs to a second to-be-confirmed fault, taking over control of the first control module in the neural network processor to control the computing module in the neural network processor to perform a first re-computation operation to obtain a first computation result;
controlling the computing module to perform a second re-computation operation based on the first computation result;
in response to no new fault information being received after the first re-computation operation and the second re-computation operation are completed, updating the fault type to a recovered fault and releasing the takeover control of the first control module.

5. The method according to any one of claims 2 to 4, wherein before the handling the fault in the faulty module using a preset regulation mode according to the fault type, the method further comprises:
when the fault type belongs to a to-be-confirmed fault, taking over control of the first control module in the neural network processor to control the computing module in the neural network processor to perform a self-test operation;
in response to no new fault information being received after the self-test operation is completed, updating the fault type to a transient recoverable fault and controlling the computing module to perform a re-computation operation;
in response to no new fault information being received after the re-computation operation is completed, releasing the takeover control of the first control module; or
in response to receiving new fault information after the self-test operation is completed, updating the fault type to a permanent unrecoverable fault and controlling the neural network processor to perform a restart operation.

6. The method according to claim 1, wherein the handling the fault in the faulty module using a preset regulation mode according to the fault type comprises:
when the fault type belongs to a to-be-confirmed fault, sending the fault type to a second control module in the neural network processor, so that the second control module controls the computing module in the neural network processor to perform a re-computation operation according to preset configuration information necessary for re-computation, to obtain a re-computation result;
redetermining the fault type based on the re-computation result to obtain a redetermined fault type;
in response to the redetermined fault type being the same as the previously determined fault type, handling the fault in the faulty module using the preset regulation mode.

7. The method according to claim 6, wherein the controlling the computing module in the neural network processor, by second control module, to perform a re-computation operation according to the preset configuration information necessary for re-computation to obtain a re-computation result comprises:
the second control module controlling the computing module to perform at least two re-computation operations according to the preset configuration information necessary for re-computation to obtain at least two re-computation results;
the second control module comparing the at least two re-computation results to obtain a comparison result;
obtaining the re-computation result based on the comparison result.

8. The method according to claim 1, wherein the obtaining fault information of the neural network processor comprises:
obtaining model-related information, hardware-related information, and operation-related information of the faulty module in the neural network processor;
the determining the fault type of the faulty module in the neural network processor according to the fault information comprises:
determining the fault type of the faulty module based on at least one of the model-related information, the hardware-related information, or the operation-related information.

9. A fault handling apparatus for a neural network processor, comprising:
a fault information obtaining module, configured to obtain fault information of the neural network processor;
a fault type determination module, configured to determine a fault type of a faulty module in the neural network processor according to the fault information;
a fault handling module, configured to handle the fault in the faulty module using a preset regulation mode according to the fault type.

10. A computer-readable storage medium, wherein the storage medium stores a computer program, and the computer program is used to execute the fault handling method for the neural network processor according to any one of claims 1-8.

11. An electronic device, wherein the electronic device comprising:
a neural network processor;
a memory, configured to store executable instructions of the neural network processor, wherein
the neural network processor is configured to read the executable instructions from the memory and execute the instructions to implement the fault handling method for the neural network processor according to any one of claims 1-8.
